# FASCICULE DE BREVET EUROPEEN

(11) **EP 0 725 002 B1**
(45) Date de publication et mention de la délivrance du brevet: **03.06.1998**
(21) Numéro de dépôt: 96400222.4
(22) Date de dépôt: 01.02.1996
(51) Int. Cl.: B62D 55/088

(54) **Galet à discontinuité de contact**
Rolle mit unterbrochener Kontaktfläche
Roller with contact surface discontinuity

(30) Priorité: 01.02.1995 FR 9501317
(43) Date de publication de la demande: 07.08.1996
(73) Titulaire: ETAT FRANCAIS Représenté par le Délégué Général pour l'Armement, 75007 Paris 7ème (FR)
(72) Inventeur: Bruneau, Marc, F-49100 Angers (FR); Cayrel, Christophe, F-49460 Feneu (FR); Julien, Bernard, F-49460 Feneu (FR); Le Carour, Richard, F-49460 Montreuil-Juigne (FR)

(56) Documents cités:
- EP-A- 0 512 467
- FR-A- 504 534
- FR-A- 1 394 353
- US-A- 1 549 594
- US-A- 3 443 844
- US-A- 3 472 563

## Description

La présente invention concerne notamment le domaine des véhicules à chenilles comportant des moyens pour supprimer les matières étrangères qui se déposent autour des galets et des poulies et a plus particulièrement pour objet un galet du type comportant un axe, deux surfaces latérales et une surface périphérique et associé à un chemin de roulement et apte à supprimer ces matières étrangères.

On connait à ce titre le brevet EP-A-0 512 467 qui décrit un engin à chenille, comportant deux trains de roulement chacun comportant principalement une chenille entraînée par un galet moteur, habituellement appelé barbotin et un galet tendeur. Le galet moteur est du type comportant un axe, deux surfaces latérales et une surface périphérique et associé à un chemin de roulement, la surface périphérique présentant en outre une gorge périphérique longitudinale, chacune des surfaces latérales et la gorge périphérique longitudinale délimitant une partie, chacune des surfaces périphériques de ces parties faisant partie de la surface périphérique du galet et comportant des éléments assurant une discontinuité de contact entre le galet et le chemin de roulement, ces éléments étant constitués par des ouvertures axiales et étant aptes à permettre, sous effet de la pression de la chenille, l'évacuation axiales de la boue située entre la chenille et les surfaces périphériques des parties. Cependant lorsque ce type d'engin fonctionne dans des terrains gras, boueux ou caillouteux, la présence de boue ou de cailloux dans la gorge périphérique longitudinale peut entraîner le déchenillage, la rupture du système de tension de la chenille, voire de la chenille elle-même,

Deux types de protection contre ces incidents sont actuellement utilisés.

Le premier, décrit par exemple dans le brevet US4819999, consiste à placer des joints d'étanchéité de façon à éviter l'intrusion de matières étrangères entre la chenille et les galets.

Le deuxième, décrit par exemple dans le brevet US 5330260 consiste à disposer des lames à proximité de la bande de roulement des galets afin d'enlever les matières étrangères, telle la terre, qui peuvent s'y accumuler et créer des surtensions dans la chenille.

Cependant, ces moyens de protection sont fragiles, et leur défaillance en fonctionnement n'est généralement pas décelable.

Lorsque ledit galet tendeur est mobile et la tension contrôlée par un dispositif approprié, tel le dispositif décrit dans le brevet FR2703971, les deux types de protection précédemment cités peuvent être utilisés. En l'absence de ces protections, le pilote est généralement informé lorsque le déplacement du galet tendeur atteint une certaine valeur seuil, ce déplacement pouvant compenser l'apparition d'une certaine épaisseur de matelas de terre sur les galets. Le pilote doit alors dégager ces matelas de terre avant de repartir.

Un tel dispositif nécessite donc des temps d'immobilisation importants ainsi que des moyens de contrôle coûteux.

Le but de l'invention est de palier ces inconvénients en proposant des moyens simples et résistants permettant de supprimer, pendant le fonctionnement de l'engin, les matières étrangères qui se déposent autour des galets.

La solution apportée est un élément tournant, tel une poulie ou un galet du type comportant un axe, deux surfaces latérales et une surface périphérique, associé à un chemin de roulement, caractérisé en ce que la surface périphérique du galet comporte au moins une gorge débouchant dans au moins l'une des surfaces latérales du galet et assurant une discontinuité de contact entre le galet et le chemin de roulement.

Selon une caractéristique permettant d'accroître l'élimination desdites matières étrangères, au moins une des surfaces latérales du galet est concave.

Dans le but d'accroître la résistance du galet, des cordons réalisés dans le même matériau que celui du galet, peuvent être prévus de façon à relier, au niveau de la surface latérale du galet, les sommets d'une même gorge, les gorges ne débouchant plus alors que partiellement dans la surface latérale du galet.

Selon un mode de réalisation particulier, les gorges sont de mêmes dimensions et chaque gorge présente un plan de symétrie, ce plan de symétrie faisant un angle α radians avec le plan diamétral du galet, α étant différent de π/2 radians.

Selon une caractéristique particulière, la surface périphérique du galet présente en outre une gorge périphérique longitudinale délimitant deux parties.

Selon une caractéristique additionnelle, les gorges sont régulièrement espacées, avec un pas d entre elles sur les deux parties, mais décalées d'un demi pas d'une partie à l'autre.

Selon une autre caractéristique additionnelle, les gorges de l'une des parties faisant un angle α avec le plan diamétral du galet, α étant différent de π/2 radians et les gorges de l'autre partie font un angle de (π-α) radians.

Dans le but de limiter le bruit et l'usure du galet, celui-ci peut comporter un revêtement, du type patin, en élastomère.

Selon une autre caractéristique, un galet selon l'invention est appliqué à un train de roulement du type comportant une chenille et des galets.

Dans le cas, où la chenille possède des dents qui sont espacées avec un pas d1 et où les gorges du galet sont espacées avec un pas d, il est préférable que d et d1 soient différents afin de réduire les risques de déchenillage.

D'autres avantages et caractéristiques de la présente invention apparaîtront dans la description d'un mode de réalisation de l'invention appliqué à un engin blindé de terrassement, en regard des figures annexées parmi lesquelles :
- la figure 1 présente un schéma général d'un engin blindé de terrassement,
- la figure 2 montre un schéma des patins d'une chenille,
- sur la figure 3, est représenté un galet selon l'état de la technique,
- les figures 4, 5 et 6 montrent des schémas d'un galet tendeur selon ladite variante de réalisation de l'invention.

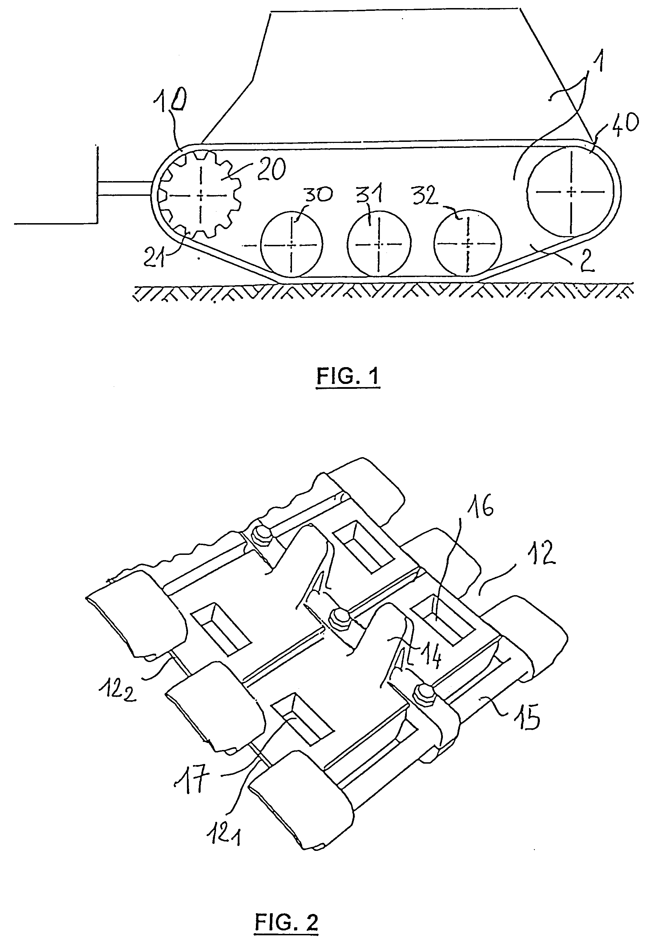

Comme montré sur la figure 1, un engin blindé de terrassement, appelé engin dans la suite, comporte généralement un châssis 1, et deux trains de roulement 2, disposés de façon symétrique par rapport au plan de symétrie du châssis. Chaque train comporte une chenille 10 constituée par des patins articulés 12 et qui est montée autour d'un barbotin 20, d'un galet tendeur 40 et trois galets porteurs 30,31 et 32.

Comme montré sur la figure 2, chaque patin de la chenille est de forme rectangulaire et comporte une dent centrale 14 et deux échancrures rectangulaires 16,17 disposées de part et d'autre du plan de symétrie de la dent. Deux patins consécutifs 12₁, 12₂ sont libres en rotation autour d'un axe commun 15.

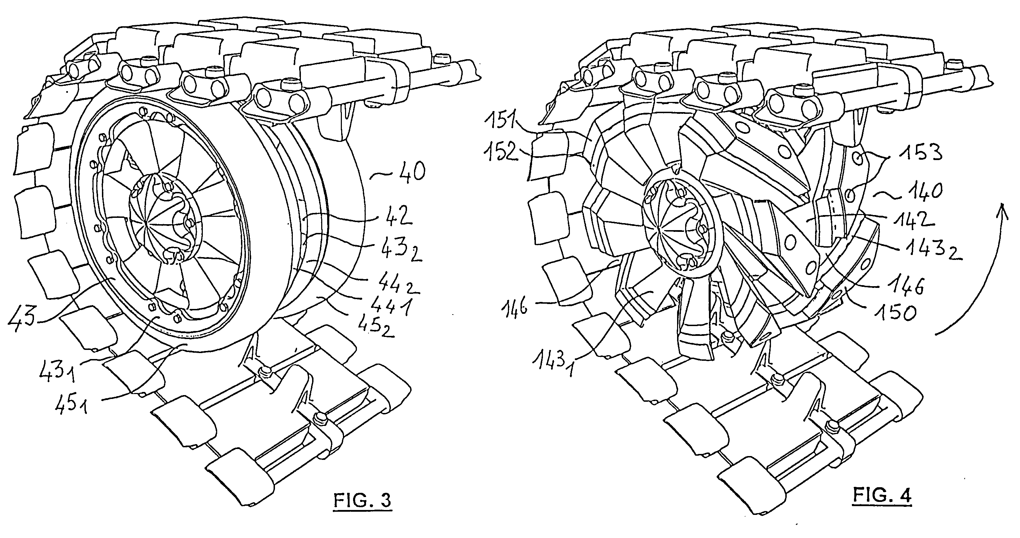

Comme montré sur la figure 3, le galet tendeur 40 d'un engin selon l'état de la technique comporte un alésage, non représenté, destiné à recevoir l'axe autour duquel tourne librement ledit tendeur, une jante 43, une gorge 42 séparant ladite jante en deux parties 43₁ et 43₂ bordées par des flasques respectivement 44₁ et 44₂ et recouvertes partiellement par une bande de roulement, respectivement 45₁ et 45₂ en élastomère, déposée par exemple par vulcanisation.

Les galets porteurs sont similaires au galet tendeur.

Le barbotin 20 comporte deux séries de dents 21 qui s'engrènent dans les échancrures 16,17 de la chenille 10.

Avant le fonctionnement de l'engin, l'axe du galet tendeur 40 est déplacé dans la direction du barbotin 20 puis la chenille 10 est positionnée autour des galets 30, 31, 32 et 40, puis déplacé en sens inverse et fixé de façon à donner une certaine valeur de tension à la chenille.

La gorge 42 du galet tendeur ainsi que celle de chacun des galets porteurs permettent le passage des dents 14 tandis que le contact galet - patins de la chenille s'effectue par les bandes de roulement respectives desdits galets. Les flasques 44 associés à la gorge servent à guider les dents 14 de la chenille 10 et à éviter l'usure de la jante.

Les figures 4 à 6 présentent des schémas d'un galet tendeur 140 selon l'invention. Il comporte un alésage 141 destiné à recevoir l'axe autour duquel il tourne librement, une jante 143, gorge circulaire 142 séparant la jante en deux parties 143₁ et 143₂, chacune d'elles possédant des gorges 146 régulièrement espacées et s'étendant, pour chaque partie, sur toute sa largeur, depuis la gorge circulaire 142 jusqu'à la face latérale 147 du galet qui lui correspond.

Afin de limiter l'usure qui résulterait d'un contact métal-métal entre les jantes et la chenille 10, des patins 150 sont disposés sur chacun des élements 148 de chacune des parties 143₁ et 143₂, éléments 148 délimités par deux gorges 146 consécutives, la gorge circulaire 142 et par l'une des surfaces latérales 147 du galet.

La surface périphérique du galet constitue ainsi une bande de roulement discontinue.

Ces patins 150 comportent une partie supérieure en élastomère 151 en contact direct avec la chenille et une semelle 152 en acier dont la face interne possède une empreinte dont les dimensions correspondent à celles de la surface périphérique des éléments 148.

Ces patins 150 sont fixés sur les jantes par des vis 153.

Dans cette variante de réalisation, chaque jante comporte huit gorges 146 qui ont sensiblement la forme d'un Vé tronqué à la base et le plan P1 de symétrie des gorges 146 est incliné par rapport au plan diamétral P2 du galet 140. Cette inclinaison est d'environ π/4 radians pour l'une des parties 143₁ et 143₂, et 3π/4 radians pour l'autre.

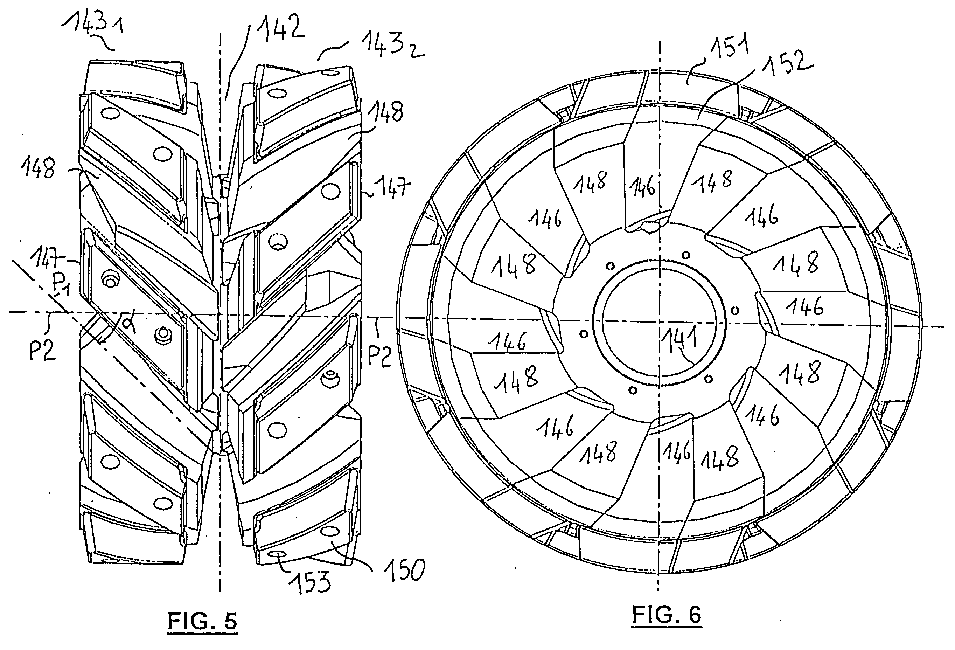

Ces gorges 146 sont de mêmes dimensions et, pour une même partie, parallèles entre elles. Leur nombre doit être tel que le pas d séparant deux gorges 146 consécutives doit être différent du pas d1 séparant deux dents 14 consécutives de la chenille 10. En outre, leur nombre ne doit pas être excessif, afin de minimiser le coût de production et de ne pas risquer de fragiliser le galet. Enfin, comme montré sur les figures 4 et 5, les gorges 146 de l'une des parties 143₁ et 143₂ sont décalées de celles de l'autre jante de la valeur d'un demi pas de gorge (d/2), et ceci afin d'avoir, d'une manière continue, une surface latérale de guidage des dents de la chenille. En outre la surface latérale de la semelle donnant sur la gorge 142 est proéminente par rapport à la jante et sert de guidage des dents de la chenille et d'élément d'usure.

Enfin, les deux surfaces latérales 147 du galet sont concaves, la périphérie apparaissant donc en saillie.

En fonctionnement, des dents 21 du barbotin 20 sont placées dans des échancrures 16,17 de la chenille 10 et cette dernière est centrée sur les galets 30, 31, 32 et 140 de telle sorte que ses dents 14 soient dans la gorge 142 de ces derniers. Une valeur fixée au préalable de tension de fonctionnement de la chenille 10 est assurée par l'intermédiaire du galet tendeur 140, comme précédemment expliqué. La flèche montrée sur la figure 4 représente le sens de rotation du galet tendeur 140 lorsque l'engin avance. Lorsque cet engin fait du terrassement dans un terrain où la terre est collante, cette dernière a tendance à se coller sur la bande roulante constituée par les patins et à être comprimée par la pression qu'exerce sur elle la chenille.

Avec un galet selon l'état de la technique, la terre ne peut être évacuée, sous l'effet de ladite pression, que latéralement par une surface très réduite correspondante à une couronne de diamètre intérieure égale à celle du galet et d'épaisseur égale à celle du matelas de terre. Aussi, cette surface d'évacuation est insuffisante et provoque l'apparition de matelas épais de terre conduisant aux incidents précités.

Avec un galet de tension selon l'invention, la terre peut être évacuée aussi bien latéralement que longitudinalement une surface d'évacuation étant présente sur chacun des cotés des patins 150.

En outre, toute la terre présente dans la gorge 142 et dans les gorges 146 a aussi tendance, sous l'effet de la pression à être évacuée vers l'extérieur du galet, la section latérale des gorges 146 étant très importante.

La mise en oeuvre de l'invention a montré qu'un engin dont les trains de roulement utilisaient un galet tendeur selon l'invention présentait une fiabilité nettement accrue par rapport à un engin selon l'état de la technique.

Les galets selon l'invention peuvent être réalisées dans de nombreuses matières telles par exemple des métaux, des alliages ou des composites et être, suivant la nature de cette matière, réalisés par différentes méthodes telles l'usinage, le moulage, le forgeage, le mécano-soudage...
Il est évident que de nombreuses modifications peuvent être apportées à la variante de réalisation précédemment décrite, sans sortir du champs de l'invention. Ainsi, les galets porteurs peuvent aussi être réalisés selon l'invention. De plus, la continuité de la surface périphérique peut être, en partie préservée, en conservant un cordon de matière, les gorges ne débouchant alors que partiellement dans la surface latérale du galet.

Dans le cas où la chenille comporte elle-même un revêtement en élastomère, le galet peut ne pas comporter de patins en élastomère.

En outre, les gorges 146 de l'une des parties 143₁ et 143₂, faisant un angle α avec le plan diamétral P2 du galet, α étant différent de π/2 radians, les gorges de l'autre partie peuvent faire un angle quelconque avec le plan diamétral P2 du galet, cet angle étant toutefois différent de π/2 radians.

De surcroît un galet tendeur selon l'invention est tout à fait compatible avec un dispositif de contrôle automatique de la tension de la chenille, jouant, dans cette combinaison, aussi pleinement son rôle.

De plus, la profondeur d'une gorge 146 peut, soit être uniforme sur toute sa longueur, soit varier, la profondeur la plus importante étant, préférablement, du coté de la surface latérale 147 du galet dans laquelle débouche cette gorge.

Enfin, par surface latérale, il faut entendre toute surface externe du galet autre que la surface périphérique.

## Revendications

1. Galet du type comportant un axe, deux surfaces latérales (147) et une surface périphérique et associé à un chemin de roulement (10), la surface périphérique présentant en outre une gorge périphérique longitudinale (142), chacune des surfaces latérales (147) et la gorge périphérique longitudinale (142) délimitant une partie (143₁, 143₂), chacune des surfaces périphériques de ces parties (143₁, 143₂) faisant partie de la surface périphérique du galet et comportant au moins un élément (146) assurant une discontinuité de contact entre le galet et le chemin de roulement (10), caractérisé en ce que l'élément (146) consiste en une gorge débouchant à l'une de ses extrémités dans la gorge périphérique longitudinale (142) et à l'autre extrémité dans la surface latérale de la partie (143₁, 143₂) comportant cette gorge.

2. Galet selon la revendication 1, caractérisé en ce que les gorges (146) ne débouchent que partiellement dans la surface latérale (147) du galet.

3. Galet selon l'une quelconque des revendications précédentes, caractérisé en ce qu'au moins une de ses surfaces latérales (147) est concave.

4. Galet selon l'une quelconque des revendications précédentes, caractérisé en ce que chacune des parties (143₁, 143₂) comporte plusieurs gorges (146) irrégulièrement espacées.

5. Galet selon l'une des revendications 1 à 2, caractérisé en ce que les gorges (146) sont régulièrement espacées sur les deux parties (143₁, 143₂) avec un pas d mais décalées d'un demi pas.

6. Galet selon la revendication 5, caractérisé en ce que les gorges (146) présentent un plan de symétrie P1 et en ce que ce plan de symétrie fait un angle α radians avec le plan diamétral P2 du galet, α étant différent de π/2 radians.

7. Galet selon la revendication 5, caractérisé en ce que les gorges (146) de l'une des parties (143₁, 143₂) font un angle α radians avec le plan diamétral P2 du galet, α étant différent de π/2 radians et lues gorges (146) de l'autre partie font un angle de (π-α) radians.

8. Galet selon l'une quelconque des revendications précédentes, caractérisé en ce que les éléments délimités par lesdites gorges (146) et la ou les surfaces latérales (147) du galet, sont recouvertes de patins (150) en élastomère.

9. Train de roulement du type comportant une chenille (10) et des galets, et utilisant au moins un galet selon l'une quelconque des revendications précédentes.

## Claims

1. A roller of the type comprising an axle, two side surfaces ( 147 ) and a peripheral surface, combined with a runway ( 10 ), the peripheral surface being in addition provided with a longitudinal peripheral groove ( 142 ), each side surface ( 147 ) and the longitudinal peripheral groove ( 142 ) delimiting a section ( 143₁ and 143₂ ), each peripheral surface of these parts ( 143₁ and 143₂ ), belonging to the peripheral surface of the roller and comprising at least one element ( 146 ) which ensures a discontinuous contact between the roller and the runway ( 10 ) , characterised in that the element ( 146 ) consists in a groove one extremity of which opens into the longitudinal peripheral groove ( 142 ) and the other extremity into the side surface of the part ( 143₁ and 143_{2 )} comprising this groove.

2. A roller according to claim 1, characterised in that grooves (146 ) open only partly in the roller side surface ( 147 ).

3. A roller according to any of the previous claims characterised in that at least one of its side surfaces ( 147 ) is concave.

4. A roller according to any of the previous claims, characterised in that each part ( 143₁ and 143_{2 )}, comprises several grooves ( 146 ) irregularly spaced.

5. A roller according to any of claims 1 to 2, characterised in that grooves ( 146 ) are regularly spaced on both parts ( 143₁ and 143_{2 )}, with a pitch d but shifted by a half-pitch.

6. A roller according to claim 5, characterised in that grooves ( 146 ) have a plane of symmetry P1 and in that the plane of symmetry forms an angle of α radians with the diametrical plane P2 of the roller, α being different from PI/2 radians.

7. A roller according to claim 5, characterised in that grooves (146 ) of one part ( 143₁ or 143_{2 )}, form an angle α with the diametrical plane P2 of the roller, α being different from PI/2 radians and the grooves ( 146 ) of the other part form an angle of (PI-α) radians.

8. A roller according to any of the previous claims, characterised in that the elements delimited by the said grooves ( 146 ) and the side surface(s) ( 147 ) of the roller, are coated with elastomer skids ( 150 ).

9. A track of the type comprising a crawler ( 10 ) and rollers, and using at least one roller according to any of the previous claims.

## Patentansprüche

1. Rolle mit einer Achse, zwei Seitenflächen (147) und einer Umfangsfläche in Verbindung mit einer Laufbahn (10), wobei die Umfangsfläche zusätzlich mit einer peripheren Längsnute (142) versehen ist und jede der Seitenflächen (147) und die periphere Längsnute (142) einen Abschnitt (143₁ und 143₂) abgrenzen; jede Umfangsfläche dieser Abschnitte (143₁ und 143₂) ist Teil der Umfangsfläche der Rolle und hat mindestens ein Element (146) zum Unterbrechen des Kontaktes zwischen der Rolle und der Laufbahn (10), dadurch gekennzeichnet, daß das Element (146) aus einer Nute besteht, welche mit einem Ende in der peripheren Längsnute (142) und mit dem anderen Ende in der Seitenfläche des Abschnitts (143₁, 143₂), welcher diese Nute enthält, mündet.

2. Rolle gemäß Patentanspruch 1, dadurch gekennzeichnet, daß die Nuten (146) nur bereichsweise in die Seitenfläche (147) der Rolle münden.

3. Rolle gemäß irgendeinem der vorstehenden Patentansprüche, dadurch gekennzeichnet, daß mindestens eine der Seitenflächen (147) konkav ist.

4. Rolle gemäß irgendeinem der vorstehenden Patentansprüche, dadurch gekennzeichnet, daß jeder der Abschnitte (143₁, 143₂) mit mehreren Nuten (146) in ungleichmäßigen Abständen versehen ist.

5. Rolle gemäß einem der Patentansprüche 1 bis 2, dadurch gekennzeichnet, daß die Nuten (146) auf den beiden Abschnitten (143₁, 143₂) mit einer Teilung d in regelmäßigen Abständen angeordnet, jedoch um eine halbe Teilung versetzt sind.

6. Rolle gemäß Patentanspruch 5, dadurch gekennzeichnet, daß die Nuten (146) eine Symmetrieebene P1 aufweisen, und daß diese Symmetrieebene mit der Diametralebene P2 der Rolle einen Winkel α rad bildet, wobei α und π/2 rad unterschiedlich sind.

7. Rolle gemäß Patentanspruch 5, dadurch gekennzeichnet, daß die Nuten (146) eines der Abschnitte (143₁, 143₂) mit der Diametralebene P2 der Rolle einen Winkel α rad bilden, wobei α und π/2 rad unterschiedlich sind und die Nuten (146) des anderen Abschnitts einen Winkel von (π-α) rad bilden

8. Rolle gemäß irgendeinem der vorstehenden Patentansprüche, dadurch gekennzeichnet, daß die von den genannten Nuten (146) begrenzten Elemente und die Seitenfläche(n) (147) der Rolle mit Auflagen (150) aus elastomerischem Material versehen sind.

9. Laufzug mit einer Gleiskette (10) und Rollen, wobei mindestens eine Rolle gemäß irgendeindem der vorstehenden Patentansprüche benutzt wird.
